# EUROPÄISCHE PATENTSCHRIFT

(11) **EP 0 409 779 B1**
(45) Veröffentlichungstag und Bekanntmachung des Hinweises auf die Patenterteilung: **01.06.1994**
(21) Anmeldenummer: 90810531.5
(22) Anmeldetag: 12.07.1990
(51) Int. Cl.: F24F 11/04, F24F 11/00

(54) **Vorrichtung für die geregelte Belüftung von Räumen**
Device for controlled ventilation of rooms
Dispositif pour l'aération réglée d'espaces

(30) Priorität: 21.07.1989 CH 2720/89
(43) Veröffentlichungstag der Anmeldung: 23.01.1991
(73) Patentinhaber: Hesco Pilgersteg AG, CH-8630 Rüti (CH)
(72) Erfinder: Fahrni, Heinz, CH-8636 Wald (CH); Rüegg, Max, CH-8636 Wald (CH)
(74) Vertreter: Quehl, Horst Max, Dipl.-Ing.

(56) Entgegenhaltungen:
- DE-A- 2 542 160
- FR-A- 2 408 172

## Beschreibung

Die Erfindung betrifft eine Vorrichtung für die geregelte Belüftung von Räumen, mit einem in einem Kanalstück eingebauten Regelorgan für die Drosselung des Durchströmquerschnittes in dem Kanalstück, mit einem Regelantrieb für die Regelbewegung des Regelorganes einer Messeinrichtung für die Messung der Durchströmmenge durch das Kanalstück und mit einem zwischen der Messeinrichtung und dem Regelantrieb angeordneten und mit diesem verbundenen Regelgerät, wobei die Messeinrichtung für die Messung eines für die Mengenmessung massgeblichen Druckunterschiedes zwei in Strömungsrichtung aufeinanderfolgende Messstellen aufweist.

Eine an nicht näher bezeichneter Stelle in einem Strömungskanal angeordnete Vorrichtung der genannten Art ist beispielsweise bekannt durch die EP-A-0 128 690. Die Herstellung des venturidüsenartig verengten Kanalstücks ist aufwendig, da dieses, wie die gesamte Kanalwand für Belüftungsanlagen aus Sicherheitsgründen aus hitzebeständigem Material bestehen muss.

Der Erfindung liegt die Aufgabe zugrunde, eine Vorrichtung der genannten Art zu finden, die durch eine günstige, gleichmässige Strömungsführung eine besonders genaue Messung und Regelung ermöglicht, die geringe Strömungsverluste bewirkt und die ausserdem aus wenigen, leicht herstellbar Teilen besteht. Vorzugsweise soll sie in Strömungsrichtung eine kurze Abmessung aufweisen, so dass sie besonders auch angrenzend an die Abzweigung eines Hauptkanals oder an Bereichen ungleichmässiger Durchströmung in eine Belüftungsanlage einbaubar ist. Die Lösung dieser Aufgabe erfolgt erfindungsgemäss durch einen gleichachsig und mit Abstand zu der Wand des Kanalstückes in diesem befestigten, kreisringförmigen, als Hohlkörper ausgebildeten Strömungskörper, dessen Ringguerschnitt in Strömungsrichtung eine längliche Form hat und in dem sich zuströmseitig eine Druckmesskammer befindet, die an der angeströmten, einen Staudruck bildenden Ringfläche mehrere auf einem Kreisring angeordnete Druckmessöffnungen aufweist, wobei die Druckmesskammer über einen kurzen Kanal mit der Messeinrichtung verbunden ist und ein zweiter kurzer Kanal die Messeinrichtung mit einem in Strömungsrichtung hinter der Druckmesskammer angeordneten Raum verbindet. Vorteilhafte Ausgestaltungen dieser Lösung sind Gegenstand der abhängigen Ansprüche.

Im folgenden wird die Erfindung anhand von in den Zeichnungen dargestellten Ausführungsbeispielen näher erläutert. Es zeigt:
- Fig.1: eine schematische Querschnittsdarstellung eines Teiles einer Belüftungsanlage,
- Fig.2: einen Grundriss des Anlagenteiles nach Fig. 1,
- Fig.3: ein Einbaubeispiel einer erfindungsgemässen Vorrichtung an einer bogenförmigen Kanalabzweigung,
- Fig.4: ein Einbaubeispiel einer erfindungsgemässen Vorrichtung an einer T-förmigen Kanalabzweigung,
- Fig.5: eine Querschnittsdarstellung eines ersten Ausführungsbeispieles der Vorrichtung, entlang der Linie V-V der Fig.6,
- Fig.6: eine Ansicht der Vorrichtung nach Fig .5 in Strömungsrichtung,
- Fig.7: eine Querschnittsdarstellung eines zweiten Ausführungsbeispieles der Vorrichtung, entlang der Linie VII-VII der Fig.8
- Fig.8: eine Ansicht der Vorrichtung nach Fig.7 in Strömungsrichtung,
- Fig .9: eine Querschnittsdarstellung eines dritten Ausführungsbeispieles der Vorrichtung und
- Fig. 10: eine Querschnittsdarstellung eines vierten Ausführungsbeispieles der Vorrichtung.

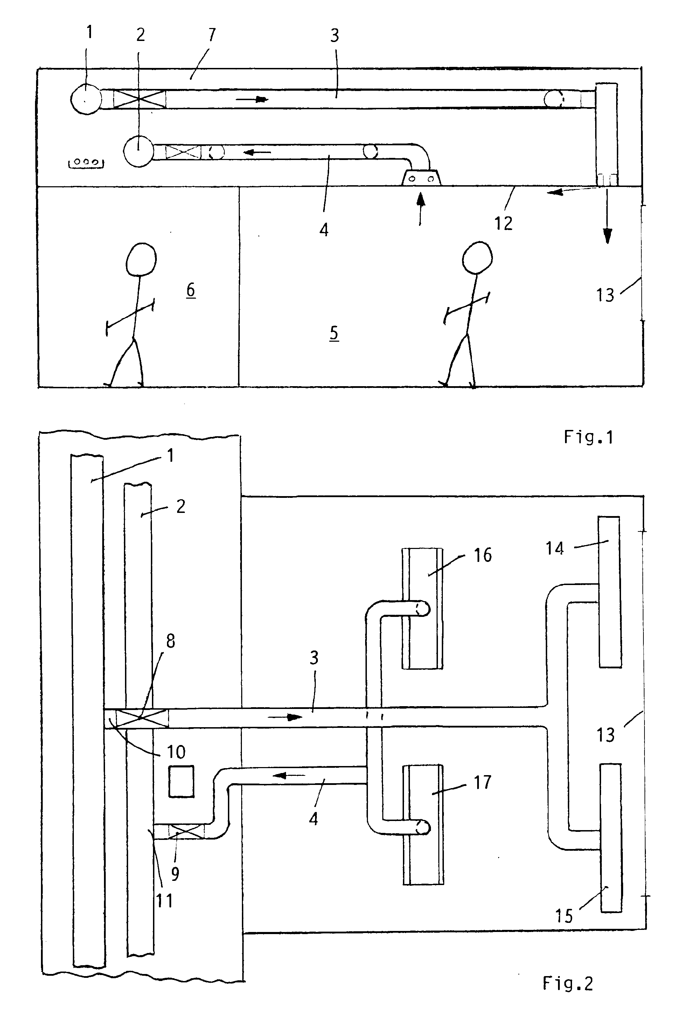

Die Fig.1 und 2 zeigen schematisch die übliche Anordnung von Hauptleitungen 1,2 und Abzweigleitungen 3,4 einer Anlage für die Belüftung von Räumen 5. Diese beiden Hauptleitungen 1,2 für die Zu- und Abluft werden üblicherweise in einem oberhalb des Korridors 6 verlaufenden Versorgungskanal 7 einer Gebäudekonstruktion geführt. Vorzugsweise ist in jeder Abzweigleitung, d.h. in beiden Strömungsrichtungen, je eine Vorrichtung 8,9 eingebaut. Für eine erleichterte und die Innenarchitektur nicht störende Anordnung sowie zur Vermeidung einer Geräuschweiterleitung zu den Räumen 5 sind diese Vorrichtungen 8,9 vorzugsweise angrenzend an die Abzweigstellen 10,11 und zusammen mit den Hauptleitungen 1,2 innerhalb des Versorgungskanals 7 eingebaut.

Im dargestellten Ausführungsbeispiel wird die Luft über in der Raumdecke 12 und in der Nähe der Fenster 13 angeordnete Luftauslasskästen 14,15 in den Raum 5 eingeleitet und über mit Dekkenleuchten 16,17 kombinierte Luftabsaugöffnungen abgeführt.

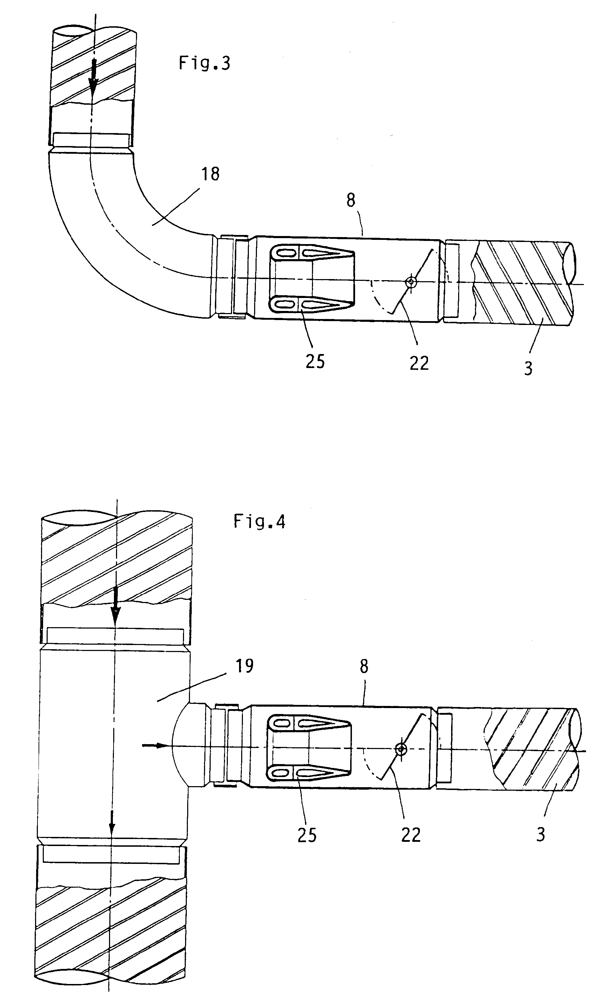

Die Konstruktion von Abzweigstellen 10,11 in Form eines Rohrkrümmers 18 oder in Form eines T-Rohrstückes 19 sowie der Einbau und die Anordnung der Regelvorrichtungen 8,9 in den Abzweigleitungen 3 ist in Fig.3 und 4 deutlicher dargestellt.

Aufgrund der Strömungsumlenkung an den Abzweigstellen 10,11 ist das Strömungsprofil angrenzend an die Abzweigstellen 10,11 ungleichförmig. Bekannte Regelvorrichtungen arbeiten deshalb bei Anordnung in der Nähe der Abzweigstellen 10,11 ungenau, besonders auch aufgrund einer starken Abhängigkeit des Messortes im ungleichförmigen Strömungsprofil.

Entsprechend einem an sich bekannten Messprinzip wird durch ein Druckmessgerät 20 die für die Strömungsmenge massgebliche Druckdifferenz zwischen zwei in Strömungsrichtung am Strömungskörper 25 hintereinander folgenden Strömungsstellen gemessen. Das Messignal des Druckmessgerätes 20 wird einem Regelgerät 21,21′,21˝,21‴ zugeführt, durch das ein Regelorgan, z.B. die Regelklappe 22 oder ein axial verstellbarer Schliesskörper 23, 24 über einen Regelantrieb 26, 26′ ,26˝, 26‴ in die der gewünschten Durchströmungsmenge entsprechende Position bewegt wird.

Um Messabweichungen zu vermeiden, die durch ein in Umfangsrichtung ungleichmässiges Strömungsprofil möglich wären, wird die Druckdifferenz nicht nur an einzelnen Umfangsstellen gemessen, sondern als Mittelwert zwischen zahlreichen Umfangsstellen, indem an jedem Messbereich mehrere in Umfangsrichtung in reihenförmiger Anordnung gleichmässig verteilte kleine Druckmessöffnungen 27,28,28′ jeweils in eine von zwei Druckmesskammern 29, 30,30′ innerhalb des Strömungskörpers 25, 25′ führen, zwischen denen die für die Durchströmungsmenge massgebliche Druckdifferenz mittels des Differenzdruckmessgerätes 20 gemessen wird.

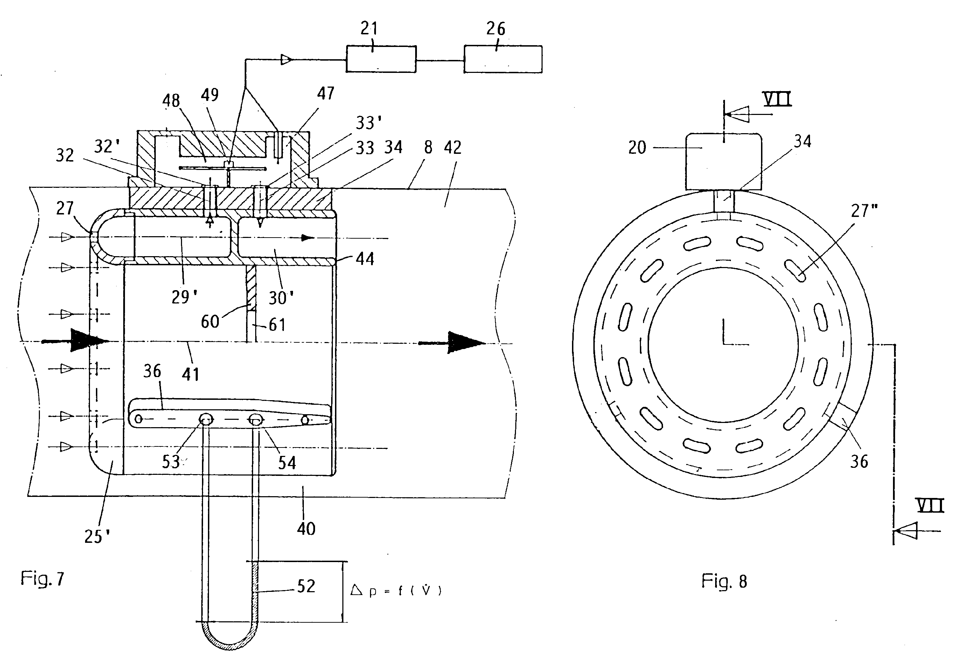

Die Verbindung zwischen den Druckmesskammern 29,30,30′ und dem aussen an dem Kanalstück 8 befestigten Messgerät 20 erfolgt durch zwei kurze Kanäle 32,33, die sich durch einen von vorzugsweise zwei als Strömungskörper geformten Stegen 34,35,36 erstrecken, durch die der Strömungskörper 25, 25′ mit gleichmässigem Abstand gegenüber der Wand des Kanalstückes gehalten ist. Durch die Anordnung von nur zwei am Strömungskörper 25′ befestigten Stegen 34,35 (Fig.8) lässt sich der Strömungskörper zusammen mit diesen einfacher in ein Kanalstück einsetzen, das den Strömungsquerschnitt verengende Versteifungsrillen o.dgl. aufweist.

Eine Ausführung als Strömungskörper bedeutet, dass sein umströmter Längsquerschnitt strömungsgünstig geformt ist. Hierfür hat er einen Ringquerschnitt der länglich und zuströmseitig abgerundet ist.

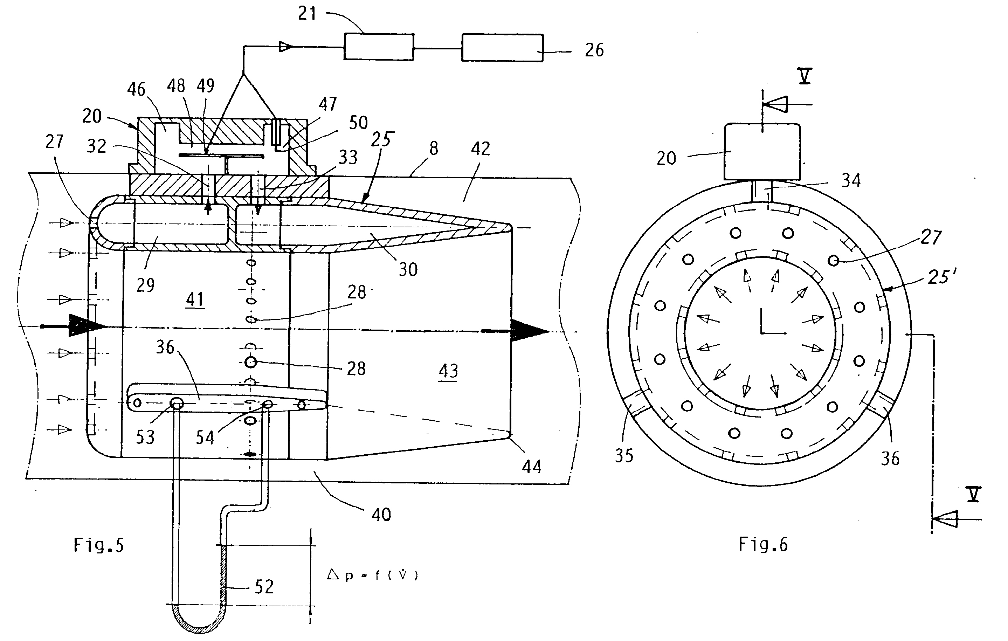

Bei den Ausführungsbeispielen der Fig. 5, 9 und 10 beruht die Messung der das Kanalstück 8 durchströmenden Luftmenge auf der Messung der Differenz des Druckes an den in der Stirnfläche des Strömungskörpers vorgesehenen Oeffnungen 27, gegenüber dem niedrigeren Druck, der in den äusseren und inneren verengten Strömungsbereichen 40,41; bzw. an den dort reihenförmig vorgesehenen Löchern 28 vorhanden ist. Beim Ausführungsbeispiel der Fig. 7,8 hingegen wird hierfür die Differenz des Druckes an diesen stirnseitigen Oeffnungen 27 gegenüber demjenigen am Abströmende 44 des Strömungskörpers gemessen, indem die Druckmesskammer 30′ nach hinten offen ist Diese Ausführungsform bewirkt ein geringeres Durchströmungsgeräusch, da die glatte äussere Oberfläche des Strömungskörpers 25′ nicht durch Oeffnungen 28 unterbrochen ist. Dieser Strömungskörper 25′ ist ausserdem besonders leicht herstellbar und überraschend strömungsgünstig.

Die Differenzdruckmessung kann nach verschiedenen Messprinzipien erfolgen. Beim vorliegenden Beispiel ist Strömungsverbindung zwischen den beiden Druckmesskammern 29,30,30′ durch das Messgerät 20 hindurch vorgesehen, und es erfolgt im Messgerät 20 eine Geschwindigkeitsmessung nach dem Hitzdrahtprinzip, denn durch die Druckunterschiede zwischen den Druckmesskammern 29 und 30 ergibt sich eine entsprechend variable Luftströmung durch das Messgerät 20 hindurch. Ein Geschwindigkeitsmessfühler 49 erfasst in dem engeren Strömungskanal 48 des Messgerätes 20 die Geschwindigkeit, und sein Signal wird in Bezug gesetzt zu demjenigen eines Temperaturfühlers 50 im erweiterten Bereich 47 des Messgerätes 20. Das nicht lineare Geschwindigkeitssignal wird im Regler 21 linearisiert, mit dem gewünschten Sollwert verglichen und als Stellgrösse für das Regelorgan, z.B. eine Regelklappe 22 ausgewertet. Durch geeignete Düseneinsätze 32′ ,33′ in die kurzen Kanäle 32 und 33 kann die Strömungsmenge durch dass Messgerät 20 hindurch diesem angepasst werden.

Eine zweite Messanordnung dient zum Test der Belüftungsanlage, indem durch wahlweisen Anschluss eines leicht ablesbaren Messgerätes 52, z.B. eines U-Rohrs, für die Differenzdruckmessung zwischen beiden Druckmesskammern 29,30,30′ des Strömungskörpers 25,25′ die in den Raum 5 strömende Luftmenge ermittelt werden kann. Dies ist aufgrund einer für die Regelvorrichtungen 8,9 bekannten Beziehung zwischen dem Differenzdruck und der Durchströmungsmenge der Regelvorrichtung 8,9 möglich. Für diese Anschlussmöglichkeit einer zweiten Messanordnung sind in einem zweiten, den Strömungskörper 25,25′,25˝ haltenden Steg 36 zwei kurze Verbindungskanäle 53,54 mit nichtdargestellten verschliessbaren Anschlussstutzen vorgesehen, die von der Aussenseite des Kanalstücks 8,9 aus zugänglich sind.

Die Verwendung einer an sich bekannten Regelklappe 22 führt zu einem bei voller Oeffnung der Regelvorrichtung 8,9 besonders geringen Druckverlust.

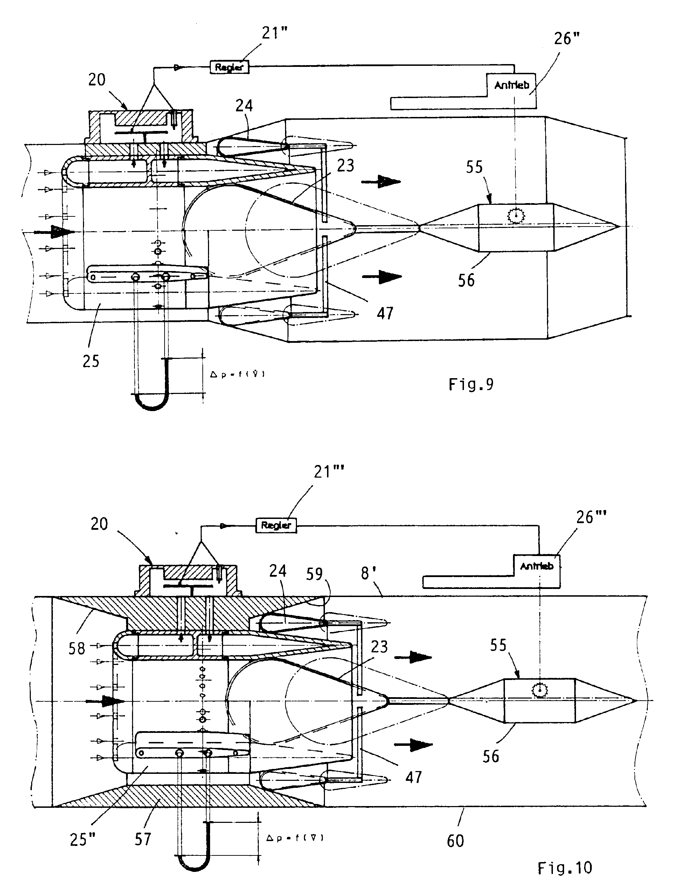

Gemäss den Ausführungsbeispielen der Fig. 9 und 10 ist für die Mengenregelung ein in axialer Richtung verstellbarer innerer und äusserer Schliesskörper 23,24 vorgesehen, die durch einen gemeinsamen Rahmen 47 fest miteinander verbunden sind, um durch den Stellantrieb 26˝ ,26‴ über die Stellmechanik 55 gemeinsam bewegt zu werden. Für einen geringen Strömungsverlust und ein geringes Strömungsgeräusch hat der innere Schliesskörper 23 Tropfenform und der äussere, ringförmige Schliesskörper 24 eine tropfenförmigen Querschnitt. Die z.B. einen Zahnstangenantrieb aufweisende Stellmechanik 55 hat ebenfalls ein als Strömungskörper ausgeführtes Gehäuse 56.

Der Strömungskörper 25,25′ ,25˝ und auch die Schliesskörper 23,24 können aus Kunststoff durch Tiefziehen oder als Spritzteile gefertigt sein, da sie innerhalb des aus Blech gefertigten Kanalstücks angeordnet sind.

Die Verengung eines Bereiches des Kanalstücks 8′ kann auch in Kombination mit dem rohrförmigen Strömungskörper 25˝ durch einen diesen mit Abstand umschliessenden und an der Kanalwand 56 dicht anliegenden Düsenkörper 57 erfolgen, so dass der rohrförmige Strömungskörper 25˝ entsprechend einen kleineren Durchmesser hat. Dieser Düsenkörper 57 hat an seinen beiden Enden konisch sich zu seiner Mitte hin verengende Innenflächen 58,59, wobei die abströmseitige Innenfläche 59 mit dem dort angeordneten Bereich des Strömungskörpers 25˝ einen v-förmigen Querschnitt bildet, in den der äussere, ringförmige Schliesskörper 24 eingreift.

Um auch bei verhältnismässig geringer Geschwindigkeit der Anströmung des Strömungskörpers im Kanalstück 8 von z.B. 3 m/sec anstatt von 10 m/sec seine Umströmung mit einer Geschwindigkeit zu erreichen, bei der sich ein für eine genaue Mengenmessung mittels Messeinrichtung 20 vorteilhaftes Druckgefälle ergibt, können besondere auswechselbare Einsatzkörper vorgesehen sein, die im Strömungskörper 25′ befestigt werden, so dass sie dessen inneren Strömungsquerschnitt verengen. Im dargestellten Ausführungsbeispiel der Fig.7 besteht dieser aus einer einfachen Lochscheibe 60 mit einer Durchströmungsöffnung 61 geigneter Grösse, die in den leicht konischen Innenkanal des Strömungskörpers 25′ eingepresst ist. Stattdessen kann jedoch auch ein axial längerer Körper vorgesehen sein, dessen Axialquerschnit einer Venturidüse entspricht.

## Patentansprüche

1. Vorrichtung für die geregelte Belüftung von Räumen, mit einem in einem Kanalstück (8,9) eingebauten Regelorgan (22-24) für die Drosselung des Durchströmquerschnittes in dem Kanalstück, einem Regelantrieb (26,26′,26,26′′′) für die Regelbewegung des Regelorganes (22-24), mit einer Messeinrichtung (20) für die Messung der Durchströmmenge durch das Kanalstück (8,9) und mit einem zwischen der Messeinrichtung (20) und dem Regelantrieb (26,26′,26˝,26′′′) angeordneten und mit diesen verbundenen Regelgerät (21,21′,21˝,21′′′), wobei die Messeinrichtung für die Messung eines für die Mengenmessung massgeblichen Druckunterschiedes zwei in Strömungsrichtung aufeinanderfolgende Messstellen (27,28; 28′) aufweist, gekennzeichnet, durch einen gleichachsig und mit Abstand zu der Wand des Kanalstückes (8,9) in diesem befestigten, kreisringförmigen, als Hohlkörper ausgebildeten Strömungskörper (25,25′,25˝), dessen Ringguerschnitt in Strömungsrichtung eine längliche Form hat und in dem sich zuströmseitig eine Druckmesskammer (29) befindet, die an der angeströmten, einen Staudruck bildenden Ringfläche mehrere auf einem Kreisring angeordnete Druckmessöffnungen (27) aufweist, wobei die Druckmesskammer (29) über einen kurzen Kanal (32) mit der Messeinrichtung (20) verbunden ist und ein zweiter kurzer Kanal (33) die Messeinrichtung (20) mit einem in Strömungsrichtung hinter der Druckmesskammer (29) angeordneten Raum (30) verbindet.

2. Vorrichtung nach Anspruch 1, dadurch gekennzeichnet, dass der Strömungskörper zwei in Strömungsrichtung hintereinander angeordnete Druckmesskammern (29,30) aufweist, wobei die hintere Druckmesskammer (30) über den zweiten kurzen Kanal (33) mit der Messeinrichtung (20) verbunden ist und eine umlaufende Reihe bildende Druckmessöffnungen (28) die hintere Druckmesskammer (30) mit dem vom Strömungskörper umschlossenen Raum oder diesen umschliessenden Raum verbinden.

3. Vorrichtung nach Anspruch 1 oder 2, dadurch gekennzeichnet, dass die auf einem Kreisring angeordneten Druckmessöffnungen (27) durch sich in Ringrichtung erstreckende Schlitze (28˝) gebildet sind.

4. Vorrichtung nach Anspruch 1, dadurch gekennzeichnet, dass der Strömungskörper zwei in Strömungsrichtung hintereinander angeordnete Druckmesskammern (29′, 30′) aufweist, wobei die abströmseitige Druckmesskammer (30′) nach hinten offen (Fig.7) ist oder am abströmseitigen Ende mehrere Oeffnungen (28′) aufweist.

5. Vorrichtung nach einem der Ansprüche 1 bis 4, dadurch gekennzeichnet, dass der Strömungskörper (25,25′,25˝) über mindestens zwei in Strömungsrichtung verlaufende Stege (34-36) in gleichmässigem Abstand zu der Wand des Kanalstücks (8,9) gehalten ist, wobei die beiden kurzen Kanäle (32,33) sich durch diese Stege hindurch erstrecken.

6. Vorrichtung nach einem der Ansprüche 2 bis 5, dadurch gekennzeichnet, dass die Druckmesskammern (29,30) zwei Anschlusskanäle (53,54) für den Anschluss eines Testmessgerätes (52) aufweisen.

7. Vorrichtung nach einem der Ansprüche 1 bis 6, dadurch gekennzeichnet, dass der Strömungskörper (25˝) mit gleichmässigem Abstand von einem eine Verengung bildenden Düsenkörper (57) umschlossen ist, der an der Wand (56) des Kanalstücks (8′) anliegt.

8. Vorrichtung nach einem der Ansprüche 1 bis 7, dadurch gekennzeichnet, dass das Regelorgan eine Regelklappe (22) ist.

9. Vorrichtung nach einem der Ansprüche 1 bis 7, dadurch gekennzeichnet, dass das Regelorgan durch einen in axialer Richtung des Kanalstücks (8,9) verstellbaren inneren und äusseren Schliesskörper (23,24) gebildet ist.

10. Vorrichtung nach einem der Ansprüche 1 bis 9, gekennzeichnet, durch einen von dem kreisringförmigen Strömungskörper (25′) umschlossenen, den inneren Strömungsquerschnitt verengenden Körper (60).

11. Vorrichtung nach Anspruch 10, dadurch gekennzeichnet, dass der vom Strömungskörper (25′) umschlossene Raum sich in Strömungsrichtung verjüngend ausgebildet ist, so dass ein den inneren Strömungsquerschnitt verengender Körper (60) mit kreisförmigem Umfang in den Strömungskörper klemmend einsetzbar ist.

## Claims

1. An apparatus for the controlled ventilation of rooms, with a control member (22-24) incorporated into a duct portion (8, 9) for constricting the flow cross-section in the duct portion, with a control drive (26, 26′, 26˝, 26′′′) for the control movement of the control member (22-24) of a measuring device (20) for measuring the flow quantity through the duct portion (8, 9) and with a controller (21, 21′, 21˝, 21′′′) located between the measuring device and the control drive (26, 26′, 26˝, 26′′′) and connected thereto, the measuring device having two measurement points (27, 28, 28′) succeeding one another in the flow direction for measuring a pressure difference decisive for the quantity measurement, characterized by a circular flow body (25, 25′, 25˝) constructed as a hollow body and fixed equiaxially and spacedly with respect to the wall of the duct portion (8, 9) and its transverse section in the flow direction has an elongated shape and which contains on the inflow side a pressure measuring chamber (29), which has on the ring area, against which flow takes place and which forms a dynamic pressure several pressure measuring openings (27) arranged on a circular ring, the pressure measuring chamber (29) being connected by means of a short duct (32) to the measuring device (20) and a second short duct (33) connects the measuring device (20) to a room (30) located behind the pressure measuring chamber (29) in the flow direction.

2. An apparatus according to claim 1, wherein the flow body has two pressure measuring chambers (29, 30) arranged successively in the flow direction, the rear pressure measuring chamber (30) being connected via the second, short duct (33) to the measuring gauge (20) and a row of pressure measuring openings (28) connects the rear pressure measuring chamber (30) with the area surrounded by the flow body or the area surrounding the same.

3. An apparatus according to claims 1 or 2, wherein the pressure measuring openings (27) arranged on a circular ring are formed by slots (28˝) extending in the ring direction.

4. An apparatus according to claim 1, wherein the flow body has two pressure measuring chambers (29′, 30′) arranged successively in the flow direction, the outflow-side pressure measuring chamber (30′) being open to the rear (fig. 7) or has several openings (28′) on the outflow-side end.

5. An apparatus according to one of the claims 1 to 4, wherein the flow body (25, 25′, 25˝) is kept at a uniform distance from the wall of the duct portion (8, 9) by means of at least two webs (34-36) running in the flow direction, the two short ducts (32, 33) extending through said webs.

6. An apparatus according to one of the claims 1 to 5, wherein the pressure measuring chambers (29, 30) have two connecting ducts (53, 54) for the connection of a test measuring device (52).

7. An apparatus according to one of the claims 1 to 6, wherein the flow body (25˝) is surrounded with a uniform spacing by a constriction-forming nozzle body (57), which engages on the wall (56) of the duct portion (8′).

8. An apparatus according to one of the claims 1 to 7, wherein the control member is a control flap (22).

9. An apparatus according to one of the claims 1 to 7, wherein the control member is formed by an inner and outer closing body (23, 24) adjustable in the axial direction of the duct portion (8, 9).

10. An apparatus according to one of the claims 1 to 9, wherein there is a body constricting the inner flow cross-section and which is surrounded by the circular flow body.

11. An apparatus according to claim 10, wherein the area surrounded by the flow body tapers in the flow direction, so that a body with a circular circumference constricting the inner flow cross-section can be fixed in the flow body.

## Revendications

1. Dispositif pour l'aération réglée d'espaces avec un organe de régulation (22-24) monté dans un tronçon de conduit (8, 9) pour l'étranglement de la section transversale de passage dans le tronçon de conduit, avec un mécanisme de réglage (26, 26′, 26˝,26′′′) pour la commande de réglage de l'organe de régulation (22-24), avec un dispositif de mesure (20) pour la mesure du débit dans le tronçon de conduit (8, 9) et avec un appareil de régulation (21, 21′, 21˝, 21′′′) disposé entre le dispositif de mesure (20) et le mécanisme de réglage (26, 26′, 26˝,26′′′) et relié à ce dernier, le dispositif de mesure présentant deux points de mesure (27, 28; 28′) qui se suivent dans le sens de circulation pour la mesure d'une différence de pression qui est fonction du débit, caractérisé par la présence d'un organe déflecteur (25, 25′, 25˝) ayant la forme d'un corps creux circulaire, coaxial au tronçon de conduit (8, 9) et fixé à distance à la paroi de ce tronçon de conduit, organe déflecteur dont la section transversale annulaire présente dans le sens de l'écoulement une forme allongée et dans lequel se trouve, côté admission, une chambre de mesure de pression (29), qui présente sur sa face annulaire soumise à la pression dynamique plusieurs orifices de mesure de pression (27) disposés suivant un cercle, la chambre de mesure de pression (29) étant par l'intermédiaire d'un court conduit (32) reliée au dispositif de mesure (20) tandis qu'un deuxième court conduit (33) connecte le dispositif de mesure (20) à une chambre (30) qui dans le sens de circulation est disposée en aval de la chambre de mesure de pression (29).

2. Dispositif suivant la revendication 1, caractérisé par le fait que l'organe déflecteur présente deux chambres de mesure de pression (29, 30) disposées l'une derrière l'autre dans le sens de l'écoulement, la chambre de mesure de pression postérieure (30) étant par l'intermédiaire du deuxième court conduit (33) reliée au dispositif de mesure (20) et des orifices de mesure de pression (28) constituant une série circulaire reliant la chambre de mesure postérieure (30) à l'enceinte enveloppée par l'organe déflecteur ou à l'enceinte entourant celui-ci.

3. Dispositif suivant la revendication 1 ou la revendication 2, caractérisé par le fait que les orifices de mesure de pression (27) disposées suivant un cercle sont constituées par des fentes (28˝) orientées dans le sens du cercle.

4. Dispositif suivant la revendication 1, caractérisé par le fait que l'organe déflecteur présente deux chambres de mesure de pression (29′, 30′) situées l'une derrière l'autre dans le sens de l'écoulement, la chambre de mesure de pression (30′) située en aval étant ouverte vers l'extérieur (Fig. 7) ou présente plusieurs ouvertures (28′) côté écoulement.

5. Dispositif suivant l'une quelconque des revendications de 1 à 4, caractérisé par le fait que par l'intermédiaire d'au moins deux entretoises (34-36) orientées dans le sens de l'écoulement, l'organe déflecteur est maintenu à distance uniforme de la paroi du tronçon de conduit (8, 9), les deux courts conduits (32, 33) s'étendant aux travers ces entretoises.

6. Dispositif suivant l'une quelconque des revendications de 2 à 5, caractérisé par le fait que les chambres de mesure de pression (29, 30) présentent deux raccords (53, 54) pour le raccordement d'un appareil de mesure de test (52).

7. Dispositif suivant l'une quelconque des revendications de 1 à 6, caractérisé par le fait que l'organe déflecteur (25˝) est entouré à distance uniforme par un élément de tuyère (57) constituant un étranglement, qui est appliqué à la paroi (56) du tronçon de conduit (8′).

8. Dispositif suivant l'une quelconque des revendications de 1 à 7, caractérisé par le fait que l'organe de régulation est un clapet de régulation (22).

9. Dispositif suivant l'une quelconque des revendications de 1 à 7, caractérisé par le fait que l'organe de régulation est constitué par un organe d'obturation (23, 24) intérieur et extérieur réglable en direction axiale du tronçon de conduit (8, 9).

10. Dispositif suivant l'une quelconque des revendications de 1 à 9, caractérisé par la présence d'un organe (60) entouré par l'organe déflecteur (25′) de forme circulaire, organe (60) qui réduit la section intérieure d'écoulement.

11. Dispositif suivant la revendication 10, caractérisé par le fait que l'enceinte enveloppée par l'organe déflecteur (25′) s'amincit dans le sens de l'écoulement, de telle sorte qu'un organe (60) à pourtour circulaire réduisant la section d'écoulement intérieure peut être mis en place de manière serrée dans l'organe déflecteur.
